# EUROPÄISCHE PATENTANMELDUNG

(11) **EP 1 189 158 A1**
(43) Veröffentlichungstag der Anmeldung: **20.03.2002**
(21) Anmeldenummer: 00120399.1
(22) Anmeldetag: 18.09.2000
(51) Int. Cl.: G06F 17/60

(54) **Vorrichtung und Verfahren zum Ausführen einer Fern-eBusiness-Transaktion**

(71) Anmelder: INTERSHOP Software Entwicklungs GmbH, 07743 Jena (DE)
(72) Erfinder: Pocock, Trevor, 07743 Jena (DE); Boehm, Thomas, 04159 Leipzig (DE); Gessner, Frank, 07743 Jena (DE); Schambach, Stephan, San Mateo, CA 94403 (US)
(74) Vertreter: Betten & Resch

(57) **Zusammenfassung**

Die vorliegende Erfindung sieht eine Vorrichtung und ein Verfahren vor, welches es ermöglichen, in einem Ordersystem Geschäftsobjekte auszuwählen und eine Transaktion zu diesem Geschäftsobjekt zu initialisieren, um dann diese Transaktionsanfrage an das Transaktionssystem weiterzuleiten, welches dann die Transaktion zu den aktuellen Konditionen dieses Transaktionssystems, also z.B. Steuern, "Shipping Costs", Rabattsysteme, - gegebenenfalls unter Einbeziehung von speziellen Kundenprofilen -, durchführt und das Ergebnis dieser Transaktionsabwicklung an das zur Initialisierung der Transaktionsabwicklung dienende Ordersystem zurückschickt.

## Beschreibung

Die vorliegende Erfindung betrifft ein Verfahren, Computersystem und Computerprogramm zur Durchführung von Transaktionen auf einem dezentralen System von Server-Computern, welche vorzugsweise über ein zur Datenübertragung geeignetes Medium, z.B. das Internet, miteinander verbunden sind.

Zum besseren Verständnis der Erfindung, jedoch nicht zur Eingrenzung des Umfanges der Erfindung sollen folgende Begriffe erläutert werden.

Ein Client kann ein Personal Computer, ein Organizer, wie z.B. Psion mxpro oder Palm V, oder auch ein Mobiltelefon o.ä. sein, mittels dessen eine Verbindung über ein zur Datenübertragung geeignetes Medium, beispielsweise das Internet, zu einem Server des erfindungsgemäßen Systems hergestellt werden kann, um Datensätze abzurufen und insbesondere Business-Transaktionen auf den Servern des erfindungsgemäßen Systems zu initialisieren.

Ein Server ist eine Datenverarbeitungseinheit, mittels dessen Datensätze verarbeitet, verwaltet und zur Abrufung bereitgehalten werden. Ein Server weist dabei wenigstens eine Schnittstelle zum Senden und Empfangen von Datensätzen über ein zur Datenübertragung geeignetes Medium, wenigstens eine Schnittstelle zum Senden bzw. Weiterleiten und Empfangen von Transaktionsanfragen und eine Speichereinheit bzw. zumindest eine Schnittstelle für den Zugriff auf eine Speichereinheit zur Speicherung und Verwaltung von Datensätzen, z.B. eine Datenbank auf.

Wenn von der Vernetzung des Computersystems gesprochen wird, so kann die Vernetzung der Server durch jegliches Medium, welches zur Datenübertragung geeignet ist, realisiert sein. Beispielhaft seien an dieser Stelle zum besseren Verständnis als geeignete Medien zur Vernetzung von Servern das Internet bzw. Intranets und Extranets benannt, die Übertragung kann dabei per Kabel, Funk oder Satellit erfolgen.

Das Verwalten von Geschäftsobjekten bedeutet in diesem Zusammenhang zum einen die Präsentation von beispielsweise Produkten eines Herstellers oder Händlers, Dienstleistungen eines Dienstleisters o.ä. durch Beschreibung, Darstellung und Kategorisierung der Produkte, Dienstleistungen o.ä. innerhalb einer Katalogstruktur auf einem Server und zum anderen die Vorbereitung und Durchführung von Transaktionen zu diesen Produkten, Dienstleistungen o.ä.

Als Geschäftsobjekte werden im Rahmen dieser Erfindungsbeschreibung die entsprechenden Datensätze bezeichnet, welche zur Präsentation eines Produktes oder einer Dienstleistung bzw. zur Durchführung einer Transaktion zu diesen Produkten oder Dienstleistungen o.ä. auf einem Server dienen.

Als eBusinesssystem wird das erfindungsgemäße Computerprogramm bezeichnet, welches auf dem Server des erfindungsgemäßen Computersystems installiert ist, mittels dessen beispielsweise Produkte oder Dienstleistungen eines Anbieters angeboten und durch einen Client über das Internet bestellt werden können. Zu diesem Zwecke ermöglicht das Computerprogramm die Erzeugung von Katalogstrukturen zur Verwaltung von beispielsweise Produkten oder Dienstleistungen eines Anbieters und die Möglichkeit der Durchführung von Transaktionen, also Bestellungen, zu den einzelnen Produkten bzw. Dienstleistungen.

Ein eBusinesssystem kann z.B. ein Singlestoresystem, Multistoresystem, Marktplatz oder ein Procurementsystem sein.

Als Ordersystem wird das erfindungsgemäße eBusinesssystem auf einem Server des erfindungsgemäßen Computersystems in dieser Beschreibung dann bezeichnet, wenn über das auf diesem Server installierte eBusinesssystem die Transaktion zu einem in diesem eBusinesssystem verwalteten Geschäftsobjekt initialisiert wird, als Transaktionssystem wird ein eBusinesssystem bezeichnet, wenn das auf einem Server des erfindungsgemäßen Computersystems installierte eBusinesssystem die Transaktion für das betreffende Geschäftsobjekt durchführen soll.

Ein Transaktionsserver ist ein Server dann, wenn das auf diesem Server installierte eBusinesssystem das Transaktionssystem ist. Als ein Orderserver wird ein Server dann bezeichnet, wenn das bei ihm installierte eBusinesssystem als Ordersystem fungiert. Ein Server, auf welchem mehrere eBusinesssysteme installiert sind, kann gleichzeitig Transaktions- und Orderserver sein.

Die Vorbereitung und Durchführung einer Transaktion bedeutet die Durchführung von Berechnungen auf dem Server für bestimmte Geschäftsobjekte, beispielsweise die Berechnung von "Shipping cost", Steuern usw. für die ausgewählten Geschäftsobjekte, aber auch beispielsweise die Auslösung der Bestellung eines entsprechenden Produktes oder einer Dienstleistung.

Zum Stand der Technik gehört, dass auf einem Server ein eBusinesssystem in Form eines Multistores betrieben wird. Jeder einzelne Store ist dabei separat administrierbar, es können in den einzelnen Stores jeweils unterschiedliche Geschäftsobjekte verwaltet werden. Transaktionen zu den jeweiligen Geschäftsobjekten erfolgen dabei im jeweiligen Store.

Weiterhin gehört zum Stand der Technik, dass der Customer in einem Multistoresystem eine Zusammenstellung von unterschiedlichen Geschäftsobjekten aus den einzelnen Stores vornehmen und dann eine Sammelbestellung initialisieren kann.

Diese Sammelbestellung ist jedoch nur dann möglich, wenn der Betreiber dieses Multistoresystems eine Transaktionsroutine für alle Shops installiert hat. Die einzelnen Stores erhalten dann eine Mitteilung, dass eines oder einige ihrer Geschäftsobjekte geordert wurden.

Es ist weiterhin Stand der Technik, dass aus einem eBusinesssystem (z.B."SAP B2B procurement") in andere eBusinesssysteme gewechselt werden kann, um dort Geschäftsobjekte auszuwählen und diese dort jeweils in einen "Virtuellen Warenkorb" (Basket) oder eine Shopping-Liste zu führen. Das Verfahren ermöglicht es, die einzelnen Warenkörbe aus den jeweiligen eBusinesssystemen in einen Warenkorb des ursprünglichen eBusinesssystem zu übertragen. Bei diesem System erfolgt die Übertragung über OCI (Open Catalog Interface) so, dass ohne ein Wechsel aus dem eBusinesssystem in den Store des jeweiligen Anbieters und das Erzeugen eines Warenkorbs in diesem Store eine synchrone Interaktion zum Austausch von Daten nicht möglich ist.

Der vorliegenden Erfindung liegt demnach die Aufgabe zugrunde, ein Verfahren und ein Computersystem vorzusehen, das die oben beschriebenen Nachteile und Probleme des Stands der Technik beseitigt.

### Zusammenfassung der Erfindung

Die vorliegende Erfindung sieht eine Vorrichtung und ein Verfahren vor, welches es ermöglichen, in einem Ordersystem Geschäftsobjekte auszuwählen und eine Transaktion zu diesem Geschäftsobjekt zu initialisieren, um dann diese Transaktionsanfrage an das Transaktionssystem weiterzuleiten, welches dann die Transaktion zu den aktuellen Konditionen dieses Transaktionssystems, also z.B. Steuern, "Shipping Costs", Rabattsysteme, - gegebenenfalls unter Einbeziehung von speziellen Kundenprofilen -, durchführt und das Ergebnis dieser Transaktionsabwicklung an das zur Initialisierung der Transaktionsabwicklung dienende Ordersystem zurückschickt.

Die Geschäftsobjekte können dabei manuell in das Ordersystem eingegeben werden oder über ein zur Datenübertagung geeignetes Medium von einem anderen eBusinesssystem zum Ordersystem übertragen und automatisch in das Ordersystem integriert werden.

Das erfindungsgemäße Verfahren ermöglicht es dem Client, Transaktionen zu einem oder mehreren Geschäftsobjekten zu initialisieren, wobei die Transaktionsaufrufe bezüglich der Geschäftsobjekte, deren Transaktionen nicht auf dem Ordersystem durchgeführt werden sollen, an die jeweiligen Transaktionssysteme weitergeleitet werden, welche dann die Transaktion zu den jeweiligen Geschäftsobjekten durchführen. Die Weiterleitung der Transaktionen kann dabei optional erfolgen. Dabei werden die Kennung des Ordersystems und gegebenenfalls ein Clientprofil an die jeweiligen Transaktionssysteme übertragen und können so in die Transaktionsroutine auf den Transaktionssysteme einbezogen werden.

Nach erfolgter Durchführung der Transaktion werden die aus der Transaktion resultierenden Ergebnisse an das Ordersystem zurückgesandt. Diese können dann gleich an den Client weitergeleitet werden oder in eine weitere Transaktionsroutine auf dem Ordersystem einbezogen werden, erst dass Ergebnis dieser auf dem Ordersystem durchgeführten Transaktion wird dann an den Client weitergeleitet.

Für die Anwendbarkeit des erfindungsgemäßen Verfahrens können die Transaktions- und Ordersysteme auf einem Server oder auf separaten, verteilten Servern installiert sein.

Die Weiterleitung einer Transaktionsanfrage kann auch über eine Vielzahl hintereinander geschalteter Transaktionssysteme erfolgen.

Die Erfindung schlägt weiterhin ein Computerprogramm gemäß Anspruch 19 und eine Datenstruktur gemäß Anspruch 21 vor. Weiterbildungen der Erfindung egeben sich aus den Unteransprüchen.

### VORTEILE DER ERFINDUNG

Das erfindungsgemäße Verfahren bietet den Vorteil, dass es beispielsweise den Betreibern der einzelnen eBusinesssysteme möglich ist, sich mit ihrem jeweiligen speziellen Preismodell an eine Vielzahl von anderen eBusinesssystemen anzubinden.

Werden auf einem Ordersystem Geschäftsobjekte geordert, so wird die Order automatisch zu dem entsprechenden Transaktionssystem weitergeleitet und dort zu den jeweiligen aktuellen Bedingungen (Shipping costs je nach Destination des Costumers, Taxes, Rabatte) bearbeitet und ein konkretes Berechnungsergebnis an das Ordersystem geschickt, welches dann an den Client zur Ansicht weitergeleitet wird.

Auf der anderen Seite können z.B. Betreiber von Portals oder Marktplätzen eine Vielzahl von Suppliern an ihren Marktplatz anbinden, ohne dass der Marktplatzbetreiber eine aufwendige Transaktionslogik für jeden einzelnen Supplier je nach dessen eigenen Business Modellen einzurichten bzw. anzupassen hat.

Obwohl der Marktplatzbetreiber eine Vielzahl von z.B. Produkten oder Dienstleistungen im Angebot hat, verteilt sich ein Grossteil des Traffics (Last) auf die angeschlossenen Transaktionssysteme welche ja die eigentlichen Transaktionen bearbeiten.

Der Client kann sich z.B. auf einem Marktplatz zu einem bestimmten Produkt verschiedene Supplier vorfinden. Das erfindungsgemäße Verfahren bietet für diesen Fall den Vorteil, dass der Client eine Preisabfrage bei den jeweiligen Suppliern vornehmen kann, ohne den Marktplatz zu verlassen und in das jeweilige eBusinesssystem der einzelnen Supplier zu wechseln.

Beispielsweise kann dem Client bei einem der Supplier ein für Bestellungen einen persönlichen Rabatt gewährt bekommen, welcher bei der Bestellung über den Marktplatz auch einbezogen werden kann, da nach dem erfindungsgemäßen Verfahren auch die Clientdaten bei der Übermittlung des Anforderung übertragen werden.

Ein Computerprogramm-Produkt kann jedes geeignete Speichermedium umfassen auf dem das Computerprogramm gespeichert ist, das das Verfahren gemäß der Erfindung ausführt.

Weitere Aufgaben, Vorteile, Merkmale und Ausführungen der vorliegenden Erfindung werden im Zusammenhang mit der detaillierten Beschreibung von bevorzugten Ausführungsbeispielen der Erfindung und aus den beigefügten Zeichnungen offensichtlich werden.

### Kurze Beschreibung der Zeichnungen

Figur 1 ist eine schematische Darstellung einer Ausführungsform des erfindungsgemäßen Computersystems;
Figur 2 ist eine schematische Darstellung der Verfahrensschritte gemäß einer Ausführungsform des erfindungsgemäßen Verfahrens darstellt
Figur 3 ist eine schematische Darstellung einer Datenstruktur eines Geschäftsobjekts, das von einem Ordersystem an ein Transaktionssystems des erfindungsgemäßen Computersystems zur Bearbeitung übermittelt wird.
Figur 4 ist eine schematische Darstellung der Weiterleitung einer Transaktionsanforderung eines Clients von einem Ordersystems an ein Transaktionssystem bzw. die Rückmeldung an den Client über das Ergebnis der Transaktion gemäß einer Ausführungsform des Verfahrens der vorliegenden Erfindung.

### Ausführliche Beschreibung der Erfindung

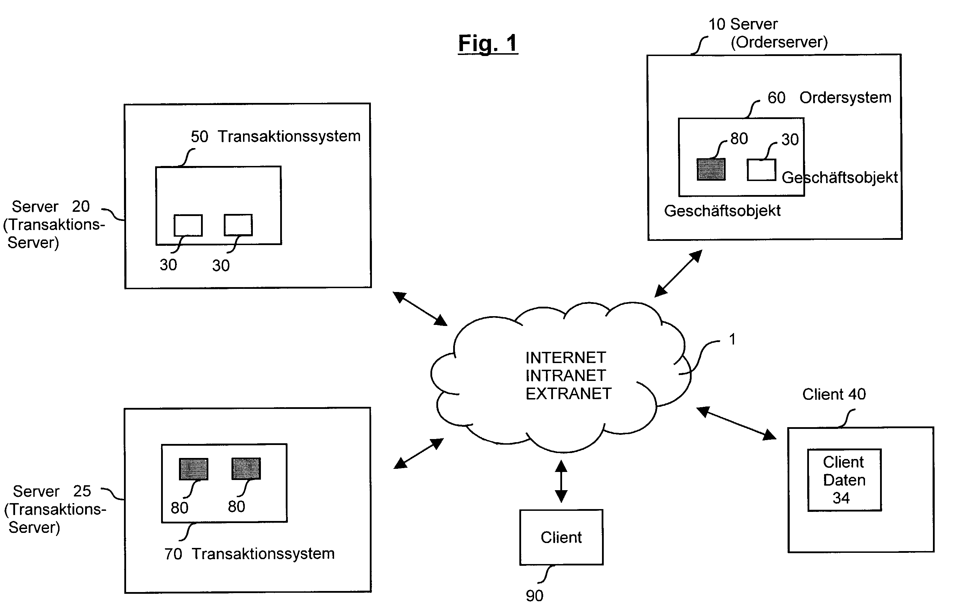

Die in Fig. 1 dargestellte Ausführungsform der Erfindung zeigt ein vernetztes Computersystem, welches wenigstens zwei Server, einen Transaktionsserver (20, 25) und einen Orderserver (10), und einen Client (40) aufweist, die über das Internet, ein Extranet oder ein Intranet (1) miteinander verbunden sind. Es ist aber auch möglich, dass nur ein Server (10) mit dem Client (40) verbunden ist. Dabei stellt der einzelne Server sowohl einen Orderserver als auch einen Transaktionsserver dar.

Auf den jeweiligen Servern (10, 20, 25), wenigstens jedoch auf dem Orderserver (10) des erfindungsgemäßen Computersystems, wird mindestens ein Geschäftsobjekt (30, 80), beispielsweise Produkte eines Herstellers oder Händlers oder beispielsweise Dienstleistungen, mittels des erfindungsgemäßen eBusinesssystems verwaltet.

Ein Ordersystem zeichnet sich dadurch aus, dass ein beliebiger Anwender über seinen Client die Daten von Geschäftsobjekten, die ja Datensätze darstellen, zur Ansicht auf dem Client abrufen kann, um zu entscheiden, ob eine Transaktion, wie beispielsweise eine Bestellung eines Verkaufsartikels, durchgeführt werden soll. Dabei können die Geschäftsobjekte auch nur vom Ordersystem für den Client abrufbar sein, da bei einem Transaktionsserver die Abfrage der Geschäftsobjekte durch einen Anwender nicht zwingend gegeben ist.

Beispielsweise können die Geschäftsobjekte lediglich in Datenbanken der Transaktionsserver abgelegt sein, auf die ein Anwender von außen nicht zugreifen kann, weil eine entsprechende Einrichtung zum Darstellen der Geschäftsobjekte für einen von außen zugreifenden Anwender auf dem Transaktionsserver nicht vorgesehen sind. Deshalb übernimmt der Orderserver (10), allgemein ausgedrückt, die Funktion eines Marktplatzes für die Geschäftsobjekte, die basierend auf Datensätzen aus Datenbanken von an den Marktplatz angeschlossenen Anbietern den ebenfalls daran angeschlossenen Clients zum Angebot generiert bzw. installiert werden. Um eine problemlose Kommunikation zwischen allen Transaktionsbeteiligten zu gewährleisten, ist eine einheitliche Schnittstelle zwischen den sich möglicherweise unterscheidenden eBusinesssystem-Typen erforderlich, die ebenfalls durch die vorliegende Erfindung vorgesehen ist.

Es ist auch möglich, dass auf allen Servern des Computersystems entsprechende Geschäftsobjekte verwaltet werden. Zu diesem Zwecke ist auf den Servern das erfindungsgemäße Computerprogramm installiert, welches ein eBusinesssystem erzeugt. Auf einem Server können dabei mehrere eBusinesssysteme (Order- und Transaktionssystem) installiert sein. Diese eBusinesssysteme sind in der Lage, für Geschäftsobjekte jeweils gesondert administrierbare Kalkulationsroutinen durchzuführen.

Für eine Vielzahl von Clients 40, 90 kann die Möglichkeit bestehen, eine Verbindung zu wenigstens einem dieser Server aufzubauen, beispielsweise über das Internet, um die jeweiligen durch die installierten eBusinesssysteme verwalteten Geschäftsobjekte abzurufen und sich beispielsweise Geschäftsobjekte auf der Anzeigeeinheit des Client Computers, z.B. auf dem Bildschirm eines Personal Computers oder in dem Display eines Mobiltelefons, anzeigen zu lassen.

Die Integration der Geschäftsobjekte 30, 80 in die eBusinesssysteme 50, 60, 70 kann auf verschiedene Weise erfolgen.

### 1. Manuell

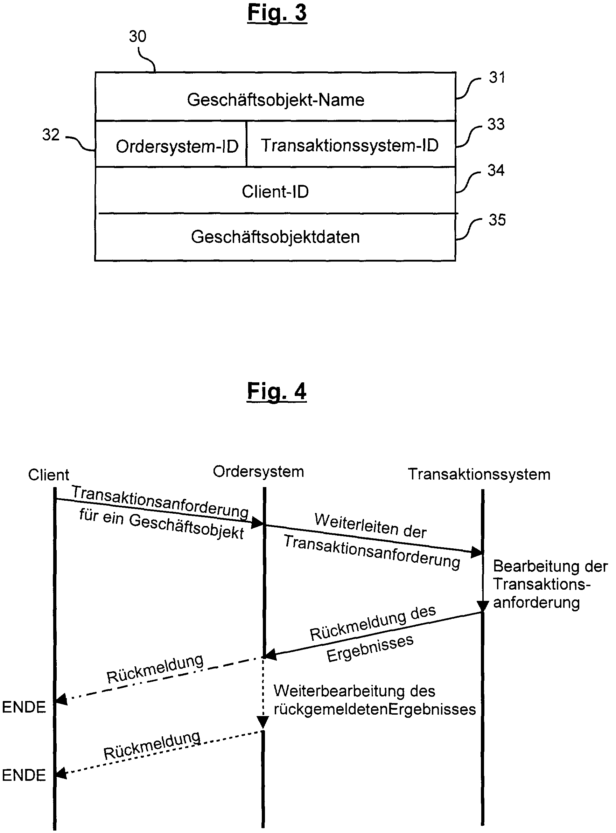

Zum einen können diese Geschäftsobjekte manuell in das Ordersystem 60 eingepflegt werden. Dabei kann diesen Geschäftsobjekten eine Kennung 33, wie in Fig.3 gezeigt, des eBusinesssystems zugewiesen werden, das als Transaktionssystem 50 Transaktionen zu den jeweiligen Geschäftsobjekten durchführen soll. Des weiteren kann der in Fig.3 dargestellten Datenstruktur eines Geschäftsobjekts 30, 80 ein Geschäftsobjektnamen bzw. -ID 31 zugewiesen werden.

Die Kennungen 32 und 33 können beispielsweise die IDs des Order- bzw. des Transaktionssystems sein.

### 2. Contentübertragung

Die Integration der Geschäftsobjekte 30, 80 kann aber auch online durch Übertragung der Geschäftsobjekte 30, 80 von einem eBusinesssystem 50,60,70 zu einem anderen eBusinesssystem 50, 60, 70 , z.B. über das Internet, erfolgen. Art und Umfang der Übertragung richtet sich nach sogenannten "Business-Regeln", welche zwischen den Betreibern der eBusinesssysteme vereinbart werden.
Nach solchen "Business-Regeln" kann z.B. festgelegt sein, welche Geschäftsobjekte übertragen werden und in welcher Form die erstmalige Übertragung bzw. spätere Aktualisierungen erfolgen sollen, z.B. indem die Geschäftsobjekte vom Transaktionssystem bereitgestellt und nach freier Wahl vom Ordersystem abgerufen werden und z.B. Aktualisierungen hinsichtlich der übertragenen Geschäftsobjekte automatisch vom Transaktionssystem sofort nach der Aktualisierung bzw. in festgelegten Zeitintervallen an das Ordersystem übertragen werden.

Dabei kann auch vereinbart werden, in welcher Form die erstmalige Übertragung bzw. spätere Aktualisierungen erfolgen sollen.

Zur Übertragung der Daten kann beispielsweise XML als Datenformat und ICE als Übertragungsprotokoll dienen.

Die Integration der Geschäftsobjekte in das Ordersystem 60 richtet sich nach den jeweiligen Anwendungs- bzw. Übertragungszweck. Beispielsweise können die Geschäftsobjekte ihrer Art nach in die jeweiligen Kategorien des Ordersystems 60 oder unter dem Namen des jeweiligen Anbieters, welcher beispielsweise einer der Betreiber der Transaktionssysteme 50 oder 70 sein kann, eingeordnet werden.

Zur Abwicklung einer Transaktion sind in der Regel Zwischenschritte erforderlich, deren Art und Umfang sich nach dem jeweiligen Geschäftsmodell bzw. den Vorstellungen des Anbieters der jeweiligen Geschäftsobjekte richtet.

Beispielsweise müssen noch eventuell anfallende Steuern oder Versandkosten berechnet werden, oder aber der jeweilige Anbieter räumt in bestimmten Fällen Rabatte ein, so dass sich die Transaktionsroutinen der Server des Computersystems bzw. der auf diesen Servern installierten eBusinesssystemen voneinander unterscheiden können.

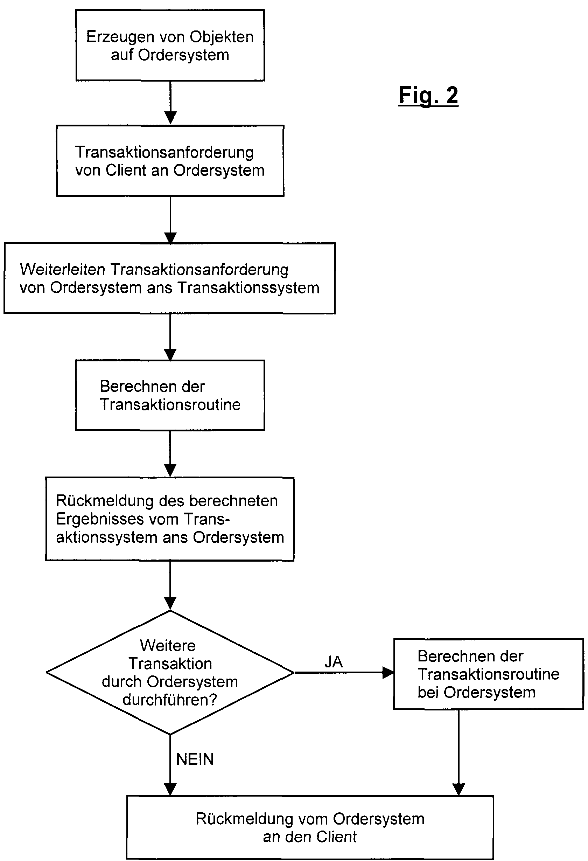

Die Erfindung ermöglicht es daher, bei Transaktionsanforderungen eines Clients, welche bei einem Server 10 empfangen werden und Geschäftsobjekte 30 betreffen, welche das Ordersystem 60 des Orderservers 10 zwar zum Abruf bereit hält, jedoch die Transaktionen zu diesen Geschäftsobjekten auf dem Transaktionssystem 50 des Transaktionsservers 20 durchgeführt werden sollen, diese Transaktionsanforderung an das Transaktionsystem 50 weiterzuleiten (siehe auch Fig.2 und Fig.4). Dabei werden gegebenfalls auch die Kennung 32 des Ordersystems 60 und die Daten 34 des Clients 40, der die Transaktion auslöst, an das Transaktionssystem 50 übertragen. Anhand der Kennung 32 des Ordersystems 60 erkennt das Transaktionssystem 50, über welches Ordersystem die Transaktionsanforderung ausgelöst wurde, so dass beispielsweise für den Fall, dass das Transaktionssystem 50 an mehrere Ordersysteme angeschlossen ist, die speziellen, zwischen diesem Transaktionssystem 50 und dem Ordersystem 60 vereinbarten "Business-Regeln" angewendet werden.

Eine dieser "Business-Regeln" könnte z.B. die Gutschrift einer Provision in bestimmter Höhe für diese Transaktion zugunsten des Ordersystems darstellen.

Die Clientdaten 34 können beispielsweise vom Transaktionssystem für die Kostenberechnung, wie z.B. "Shipping costs" in Abhängigkeit vom Wohnort des Clients, aber auch für bestimmte Sonderregelungen, wie z.B. spezielle Kundenrabatte, dienlich sein.

Nach Durchführung der Transaktion erfolgt dann eine Rückmeldung an das Ordersystem 60, die dem Ergebnis der durch das Transaktionssystem 50 auf dem Transaktionsserver 20 durchgeführten Transaktionsroutine entspricht. Diese Rückmeldung kann dann an den Client 40 weitergeleitet oder vom Ordersystem auf dem Orderserver weiterbearbeitet werden.

In einer weiteren Ausführung der Erfindung kann das Ergebnis der auf dem Transaktionssystem 50 durchgeführten Transaktion in eine weitere Transaktionsroutine des Ordersystems 60 einbezogen werden. Erst danach wird dem Client die Nachricht über das Gesamtergebnis der Transaktionsroutinen übermittelt (siehe Fig.2, vorletzter Schritt).

Dies ist erforderlich, wenn der Betreiber des Ordersystems z.B. eine Provision an den Kunden weiterreichen will bzw. die Abrechnung der Order grundsätzlich durch den Betreiber des Ordersystems 60 erfolgen soll, und daher lediglich eine aktuelle Berechnung des Transaktionssystems 50 für das entsprechende Geschäftsobjekt in die eigene Berechnung mit einbezogen werden soll.

Dies kann ebenso erforderlich sein, wenn beispielsweise zwischen dem Ordersystem und dem Client vereinbart worden ist, dass der Client für eine Transaktion, die er über das Ordersystem anfordert, Punke im Rahmen eines Punkte-Bonus-Programms gutgeschrieben bekommt oder der Client bekommt wiederum Rabatt vom Ordersystem gewährt.

Dies kann ebenso erforderlich sein, wenn beispielsweise zwischen dem Ordersystem und dem Client vereinbart worden ist, dass der Client für eine Transaktion, die er über das Ordersystem anfordert, Punkte im Rahmen eines Punkte-Bonus-Programms gutgeschrieben bekommt, oder der Client bekommt wiederum Rabatt vom Ordersystem gewährt.

Ein weiterer Grund könnte beispielsweise die Erhebung von statistischen Daten über die Häufigkeit der angeforderten Transaktionen zum jeweiligen Geschäftsobjekt durch das Ordersystem 60 auf dem Server 10 sein.

Das in den Figuren 2 und 4 dargestellte erfindungsgemäße Verfahren bietet dabei in einer weiteren Ausführung die Möglichkeit, dass der Client die Geschäftsobjekte seiner Wahl auf dem Orderserver 10 zusammenstellen kann und anschließend eine Gesamttransaktion zu den ausgewählten Geschäftsobjekten auslösen kann. Dabei können Teile dieser Gesamttransaktion Geschäftsobjekte verschiedener Transaktionssysteme sein.

Beispielsweise können aber auch Geschäftsobjekte dabei sein, deren Transaktionen durch das Ordersystem 60 durchgeführt werden sollen. Bezüglich dieser Geschäftsobjekte ist das Ordersystem 60 gleichzeitig auch Transaktionssystem.

Die vorliegende Erfindung ermöglicht die Aufsplittung der Gesamttransaktion in Einzeltransaktionen zu den einzelnen Geschäftsobjekten und deren Weiterleitung an die jeweiligen Transaktionssysteme 50, 70 unter Weiterleitung der Kennung 32 des Ordersystems 60 und gegebenenfalls der Clientdaten 34.

Für die betreffenden Geschäftsobjekte werden dann die jeweiligen Transaktionsroutinen auf den Transaktionssystemen 50, 70 durchgeführt. Sind diese abgeschlossen, so erfolgt jeweils eine entsprechende Mitteilung an das Ordersystem 60, das diese Nachricht gesondert oder zusammen mit den anderen Rückmeldungen bezüglich der anderen Geschäftsobjekte an den Client 40 weiterleitet.

In einer weiteren Ausführung der Erfindung kann beispielsweise die Weiterleitung des Transaktionsanforderung optional erfolgen. Beispielsweise kann dies davon abhängen, ob der Betreiber des Ordersystems 60 die Transaktion komplettieren kann oder nicht, beispielsweise in Abhängigkeit davon, ob er im Falle einer Warenbestellung diese Ware gerade auf Lager hat und damit selbst liefern kann.

Es ist außerdem möglich, dass eine Transaktionsanforderung von einem Ordersystem zu einem Transaktionssystem weitergeleitet wird, dieses jedoch feststellt, dass es die Transaktion nicht selbst ausführt, sondern wiederum zu einem weiteren Transaktionssystem weiterleitet usw., bis ein Transaktionssystem gefunden ist, das die Transaktion ausführt. Das Resultat der Transaktion wird dann auf gleiche Weise wieder zu dem Ordersystem zurückgeleitet.

In einer weiteren Ausführung der Erfindung können das Ordersystem und das Transaktionsssystem auch auf ein und demselben Server installiert sein. Dieser Server fungiert dann gleichzeitig sowohl als Orderserver (10) als auch als Transaktionsserver.

Die oben ausgeführten allgemeinen Erklärungen sollen nun anhand eines plastischen Beispiels mit Bezug auf die Figuren 1 bis 4 noch deutlicher gemacht werden.

Von einem eBusinesssystem 50 auf einem Server 20, dessen Betreiber beispielsweise der Hersteller von Werkzeug "XY GmbH" ist, werden Geschäftsobjekte 30, beispielsweise "XY-Sägen", auf einen anderes eBusinesssystem 60 auf einem Server 10, dessen Betreiber beispielsweise der Werkzeuggroßhändler "ABC GmbH" ist, übertragen und dort in das eBusinesssystem 60 des Servers 10 integriert. Der Server 20 fungiert in diesem Fall als Transaktionsserver und der Server 10 als Orderserver.

Über das Ordersystem 60 können nun auch die Geschäftsobjekte 30 des Transaktionssystems 50, hier also die "XY-Sägen", durch einen Client 40, z.B. zur Anzeige auf seinem Bildschirm in Form einer HTML Seite abgerufen werden. Der Client 40 kann zu diesen Geschäftsobjekten 30 Transaktionen über das Ordersystem 60 durchführen, hier beispielsweise die "XY-Sägen" bestellen, was in einer Transaktionsanforderung des Clients 40 an das Ordersystem 60 des Servers 10 resultiert.

Das erfindungsgemäße Verfahren ermöglicht, dass für den Fall, dass ein Client 40 über das Ordersystem 60 eine Transaktion zu einem Geschäftsobjekt des Transaktionssystems 50 initialisiert, dieser Transaktionsaufruf an das Transaktionssystem 50 unter Übergabe des zu bearbeitenden Geschäftsobjekts 30 incl. der Kennung 32 des Ordersystems 60, der Geschäftsobjektdaten 35 und gegebenenfalls der Clientdaten 34 weiterleitet wird.

Auf dem Transaktionssystem 50 wird dann für das betreffende Geschäftsobjekt 30, hier beispielsweise für "XY-Sägen", die entsprechende Transaktionsroutine durchgeführt, welche beispielsweise eine Bestellung, die Berechnung von Steuern oder "Shipping costs" o.ä. sein kann.

Anschließend erfolgt eine Rückmeldung über das Ergebnis der Durchführung der Transaktion auf dem Transaktionssystem 50 an das Ordersystem 60. Diese Rückmeldung kann dann an den Client 40 weitergeleitet werden.

Löst der Client 40 über das Ordersystem 60 eine Gesamttransaktion zu mehreren Geschäftsobjekten 30, 80 aus und gehören zu dieser Zusammenstellung auch Geschäftsobjekte, deren Transaktion von verschiedenen Transaktionssystemen 50, 70 durchgeführt werden sollen, z.B. die "XY-Sägen" vom Transaktionssystem 50 auf dem Server 20 der "XY-GmbH", aber auch "ZZ Hämmer" als Geschäftsobjekte 80 des Transaktionssystems 70 auf dem Server 25 der ZZ GmbH, so werden durch das erfindungsgemäße Verfahren Einzeltransaktionen zu den einzelnen Geschäftsobjekten an die jeweiligen Transaktionssysteme weitergeleitet.

Weiterhin besteht die Möglichkeit, die Weiterleitung der Transaktion zu einem Geschäftsobjekt optional zu gestalten. Beispielsweise können der Betreiber des Ordersystems 60 und der Betreiber des Transaktionssystems 50 ausgehandelt haben, dass die Transaktion auch durch das Ordersystem 60 durchgeführt werden kann, jedoch nur solange, wie der Betreiber des Ordersystems 60 die Lieferung des bestellten Produktes oder der Dienstleistung selbst vornehmen kann. Erst wenn ihm die Erbringung der Leistung nicht mehr möglich ist, z.B. wenn sein Lagerbestand das bestellte Produkt nicht aufweist bzw. die Dienstleistung aus Terminschwierigkeiten nicht erbracht werden kann, wird die Transaktion an das Transaktionssystem 50 weitergeleitet.

Hat also der Großhändler als Betreiber des Ordersystems 60 keine "XY Sägen" mehr auf Lager, so wird automatisch die Transaktion an den Transaktionssystem 50 der "XY-GmbH" weitergeleitet, die Transaktion erfolgt dann dort und somit die Bestellung zu den Konditionen der "XY- GmbH".

Für einen Fachmann ist es aus der Offenbarung der Beschreibung und den Zeichnungen, die nur exemplarischen Charakter haben, aber auch aus den Ansprüchen offensichtlich, dass die Erfindung auf einfache Art und Weise abgeändert bzw. modifiziert werden kann, ohne vom Umfang der vorliegenden Erfindung abzuweichen. Des weiteren versteht es sich von selbst, dass die Ausführungsformen der oben beschriebenen Erfindung sowohl durch Softwaremittel, als durch Hardwaremittel, als auch durch eine Kombination aus beiden realisiert werden kann.

## Patentansprüche

1. Verfahren zum Durchführen einer Transaktion in einer Server/Client-Umgebung, das die folgenden Schritte aufweist:
a) Erzeugen mindestens eines Geschäftsobjekts (30, 80), das jeweils einem Datensatz entspricht, in einem Ordersystem (60), wobei das Geschäftsobjekt eine Kennung (33) eines Transaktionssystems (50), das eine mit dem Geschäftsobjekt verbundene Transaktion ausführt, umfasst;
b) Übermitteln mindestens einer Transaktionanforderung für jeweils ein Geschäftsobjekt von mindestens einem Client (40), an das Ordersystem (60), das das Geschäftsobjekt verwaltet;
c) Weiterleiten der Transaktionanforderung zum Transaktionssystem (50), das der Kennung des Transaktionssystems des Geschäftsobjekts entspricht;
d) Durchführen einer Transaktionsroutine auf dem Transaktionssystem (50) für das entsprechende Geschäftsobjekt;
e) Rückmelden des aus der Transaktionsroutine resultierenden Ergebnisses an das Ordersystem (60); und
f) Weiterleiten des rückgemeldeten Transaktionsergebnisses vom Ordersystem (60) an den Client (40).

2. Verfahren nach Anspruch 1, wobei Ordersystem (60) und Transaktionssystem (50) auf verschiedenen, über ein zur Datenübertragung geeignetes Medium verbundenen Servern installiert sind.

3. Verfahren nach Anspruch 1, wobei der Weiterleitungsschritt c) der Transaktionsanforderung und der Rückmeldungsschritt e) des Ergebnisses über mehrere, miteinander verbundene Transaktionssysteme (50) erfolgt.

4. Verfahren nach Anspruch 1, 2 oder 3, ferner folgende Schritte aufweisend:
Bestimmen, nachdem das Ergebnis der Transaktionsroutine vom Transaktionssystem (50) ans Ordersystem (60) rückgemeldet ist, ob mit dem rückgemeldeten Ergebnis eine weitere Transaktion durch das Ordersystem (60) durchzuführen ist;
falls dem so ist, durchführen der weiteren Transaktion durch das Ordersystem (60) mit anschließendem Rückmelden des Ergebnisses der weiteren Transaktion an den Client (40), und falls dem nicht so ist, Rückmelden des Transaktionsergbnisses des Transaktionssystems (50) an den Client (40).

5. Verfahren nach Anspruch 1, wobei das Erzeugen des Geschäftsobjekts durch manuelle Integration des Geschäftsobjekts (30, 80) erfolgt, indem diesem Geschäftsobjekt eine Kennung (33) des eBusiness-Systems zugewiesen wird, das als Transaktionssystem (50) die Transaktionen zu diesem Geschäftsobjekt durchführt, und eine Kennung (32) des eBusiness-Systems, das als Ordersystem (60) diesem Geschäftsobjekt zugeordnet ist.

6. Verfahren nach Anspruch 1, wobei das Erzeugen des Geschäftsobjekts (30, 80) als Integration des Geschäftsobjekts durch Übertragung des Geschäftsobjekts von einem Business-System, insbesondere von dem Transaktionssystem (50), zu einem anderen eBusiness-System, insbesondere dem Ordersystem (60), erfolgt.

7. Verfahren nach Anspruch 1, des Weiteren folgende Schritte aufweisend:
Erstellen eines Client-Profils (34) zur Identifikation des Clients (40), das dem Geschäftsobjekt (30) zugewiesen wird, zu dem der Client (40) eine Transaktionsanforderung an das Ordersystem (60) übermittelt.

8. Verfahren nach Anspruch 1, wobei das Weiterleiten von Transaktionsanforderungen, die eine Gesamttransaktionsanforderung für eine Vielzahl von Geschäftsobjekten darstellt, an verschiedene Transaktionssysteme (50, 60, 70) erfolgt, um die Transaktion für die einzelnen Geschäftsobjekte (30, 80) bei dem zugehörigen Transaktionssystem (50, 70) durchzuführen.

9. Verfahren nach Anspruch 8, wobei eine der Transaktionen durch das Ordersystem (60) durchgeführt wird.

10. Verfahren nach Anspruch 1, wobei eine Vielzahl von Transaktionsanforderungen von mindestens einem Client (40) an das Ordersystem (60) übermittelt wird; ferner aufweisend die Schritte:
Weiterleiten der Transaktionsanforderungen als Gesamttransaktionsanforderung zum Transaktionssystem (50);
Durchführen jeweils eine Transkationsroutine für jede Transaktionsanforderung der Gesamttransaktionsanforderung auf dem Transaktionssystem (50); und
Rückmelden der resultierenden Ergebnisse an das Ordersystem (60); und Weiterleiten der rückgemeldeten Transaktionsergebnisse vom Ordersystem (60) an den Client (40).

11. Verfahren nach Anspruch 10, wobei die Gesamttransaktionsanforderung aufgesplittet wird, so dass Transaktionsanforderungen, deren Geschäftsobjekte eine identische Kennung (33) eines Transaktionssystems (50, 70) aufweisen, an die entsprechenden Transaktionssysteme zur Durchführung der Transaktionsroutine weitergeleitet werden.

12. Computersystem zum Durchführen einer Transaktion in einer Server/Client-Umgebung aufweisend:
a) eine Einrichtung zum Erzeugen mindestens eines Geschäftsobjekts, das jeweils einem Datensatz entspricht, in einem Ordersystem (60) auf einem Server (10), wobei das Geschäftsobjekt eine Kennung (33) eines Transaktionssystems (50), das eine mit dem Geschäftsobjekt verbundene Transaktion ausgeführt, umfasst;
b) eine Einrichtung zum Empfang mindestens einer Transaktionanforderung für jeweils ein Geschäftsobjekt von mindestens einem Client (40), an das Ordersystem (60), das das Geschäftsobjekt verwaltet;
c) eine Einrichtung zum Weiterleiten der Transaktionanforderung zum Transaktionssystem (50), das der Kennung des Transaktionssystems des Geschäftsobjekts entspricht;
d) eine Einrichtung zum Durchführen einer Transaktionsroutine auf dem Transaktionssystem (50) für das entsprechende Geschäftsobjekt;
e) eine Einrichtung zum Rückmelden des aus der Transaktionsroutine resultierenden Ergebnisses an das Ordersystem (60); und
f) eine Einrichtung zum Weiterleiten des rückgemeldeten Transaktionsergebnisses vom Ordersystem (60) an den Client (40).

13. Computersystem nach Anspruch 12, wobei der Client (40) ein Personal Computer, ein Organizer oder ein Mobiltelefon ist.

14. Computersystem nach Anspruch 12, wobei Client (40), Transaktionssystem (50) und Ordersystem (60) über ein zur Datenübertragung geeignetes Medium wie das Internet, ein Intranet oder ein Extranet miteinander verbunden sind.

15. Computersystem nach Anspruch 12, das einen Server (10) aufweist, der Ordersystem (60) und Transaktionssystem (50), die zusammen ein EBusiness-System bilden, umfasst.

16. Computersystem nach Anspruch 12, wobei Transaktionssystem (50) und Ordersystem (60) auf verschiedenen Servern installiert sind.

17. Computersystem nach Anspruch 16, wobei nur die Server, die ein Ordersystem (60) aufweisen, Geschäftsobjekte verwalten.

18. Computersystem nach Anspruch 14, wobei die Geschäftsobjekte im Datenformat XML übermittelt werden und als Übertragungsprotokoll ICE dient.

19. Computerprogramm aufweisend:
computerausführbare Instruktionen, um einen Computer dazu zu veranlassen ein Verfahren gemäß einem der Ansprüche 1 bis 10 auszuführen.

20. Computerprogrammprodukt aufweisend:
computerausführbare Instruktionen, um einen Computer dazu zu veranlassen ein Verfahren gemäß einem der Ansprüche 1 bis 10 auszuführen.

21. Datenstruktur aufweisend:
mindestens einen Datensatz, der einem Geschäftsobjekt entspricht, der auf einem Ordersystem (60) erzeugt wird, um das Verfahren gemäß einem der Ansprüche 1 bis 10 auszuführen.

22. Datenstruktur nach Anspruch 21, aufweisend eine Transaktionssystem-Kennung (33), eine Ordersystem-Kennung (32) und eine Client-Kennung (34).
